# EUROPEAN PATENT APPLICATION

(11) **EP 3 893 184 A1**
(43) Date of publication of application: **13.10.2021**
(21) Application number: 20217815.8
(22) Date of filing: 30.12.2020
(51) Int. Cl.: G06Q 30/02

(54) **METHOD AND SYSTEM FOR PROVIDING LOCATION-BASED PERSONALIZED CONTENT**

(30) Priority: 08.04.2020 US 202063006932 P
(71) Applicant: Framy Inc., Grand Cayman KY1-1208 (KY)
(72) Inventor: LI, Yu-Hsien, 116 Taipei City (TW)
(74) Representative: Viering, Jentschura & Partner mbB Patent- und Rechtsanwälte

(57) **Abstract**

A method and a system for providing a location-based personalized content are provided. A serving system (100) is provided for collecting activity data of a user on the Internet and forming location-based personalized data according to geographic information associated with the activity data. Geography-based features related to the activity data can be learned so as to generate a location-based personalized preference model that is used to describe a user preference. When the serving system (100) receives location data from a computer of the user, one or more location-based personalized contents that match the user preference within a geographic range can be obtained. Afterwards, one or more links based on the location-based personalized content is then transmitted to the computer, and the one or more links can be marked in a browsing program executed in the computer.

## Description

### CROSS-REFERENCE TO RELATED PATENT APPLICATION

This application claims priority to the U.S. Provisional Patent Application Ser. No. 63/006932, filed on April 8, 2020, which application is incorporated herein by reference in its entirety.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein. All references cited and discussed in this specification are incorporated herein by reference in their entireties and to the same extent as if each reference was individually incorporated by reference.

### FIELD OF THE DISCLOSURE

The disclosure is related to a technology for providing location-based content, and more particularly to a method for providing location-based personalized content according to a location of a map browsed by a user, and a system thereof.

### BACKGROUND OF THE DISCLOSURE

In existing technologies, a service provider can gather activity data of users on the Internet via various channels. The activity data is such as those from posts, likes, and shares on social media. The service provider can also gather the content that the user searches by a browser, or any response to various videos or texts posted on the social media. Therefore, the server provider can learn a user preference by analyzing the activity data. One of the objectives of the method is to provide information according to the user preference. For example, an advertisement in a commercial channel is recommended to the user based on the learned preference.

Based on the user preference obtained from data learning, the service provider can provide the advertisement to attract the user to conduct a purchase when the user browses network contents through a web browser.

However, in many cases, even if the content is based on the user preference, since the user's present location has not been considered, the service provider cannot effectively provide the content that matches the user's need.

### SUMMARY OF THE DISCLOSURE

In response to the above-referenced technical inadequacies, the present disclosure provides a method for providing location-based personalized content and a system of the disclosure is provided for learning user preferences in different geographic locations through a learning algorithm. The system provides the content according to the location-based user preferences when the user utilizes a browser program to browse the contents.

In one embodiment of the disclosure, the method is operated in a serving system that receives location data and user identification data through the browser program executed in an end user computer device. The system can determine a geographic range based on the location data. The geographic range can be determined according to the geographic range selected by the user through the browser program. The system queries a database according to the geographic range and the user identification data so as to obtain one or more location-based personalized contents within the geographic range based on the user preference. Afterwards, the system transmits the links with respect to each of the location-based personalized contents to the computer device, and the browser program marks the links on a map.

Preferably, the browser program is a graphical user interface that implements an electronic map as a background. The links with respect to the location-based personalized contents can be shown as the user icons on the electronic map.

Further, the location-based personalized contents in the database include videos, audios, pictures, and/or texts that are reported or recorded by multiple users at specific geographic ranges. After receiving the media contents, the serving system establishes correlations among the contents, the corresponding geographic locations, and the user identification data.

Further, after querying the database, when multiple location-based personalized contents based on one user preference are found at the same location, a sort by preference of the user may be employed to show the links with respect to these media contents on the electronic map in an order.

In one embodiment of the disclosure, the aforementioned browser program provides a user interface for the user to browse the contents. The links with respect to the location-based personalized contents are marked as texts, symbols, or icons marked on specific positions of the user interface.

According to one of the embodiments, in the method for establishing user preference, the serving system collects activity data in a network from the user through a software program executed in the computer device, forms a location-based personalized data with respect to the user according to geographic information in the activity data, and obtains data features and weights thereof by learning the location-based personalized data through the learning algorithm so as to generate a location-based personalized preference model used to describe the user preference for obtaining one or more location-based personalized contents based on the user preference from the database.

According to one embodiment of the system for providing the location-based personalized content, the system provides a browser program executed in a computer device, and a serving system formed by one or more servers. The serving system includes a database that includes videos, audios, pictures, or texts created and uploaded by multiple users. In the serving system, correlations among multiple media contents, geographic locations, and multiple user identification data are created. A method for providing location-based personalized content is operated in the serving system.

In an aspect, the serving system collects various activity data of the users over a network. The activity data includes the activities on various social media, search records, followings, browsing contents, and time itineraries thereof of the users. When the user receives the links marked on the browser program, further browsing records are also collected by the serving system continuously for the purpose of learning and updating the personalized preference model.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
Fig. 1 is a schematic diagram depicting a framework of a system for providing a location-based personalized content according to one embodiment of the disclosure;
Fig. 2 is a flow chart describing a process for forming a user preference in a method for providing the location-based personalized content according to one embodiment of the disclosure;
Fig. 3 is a flow chart describing the method for providing the location-based personalized content according to one embodiment of the disclosure;
Fig. 4A and Fig. 4B shows a schematic diagram of an end user browser program in one embodiment of the disclosure; and
Fig. 5A and Fig. 5B shows a schematic diagram of an end user browser program in another embodiment of the disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

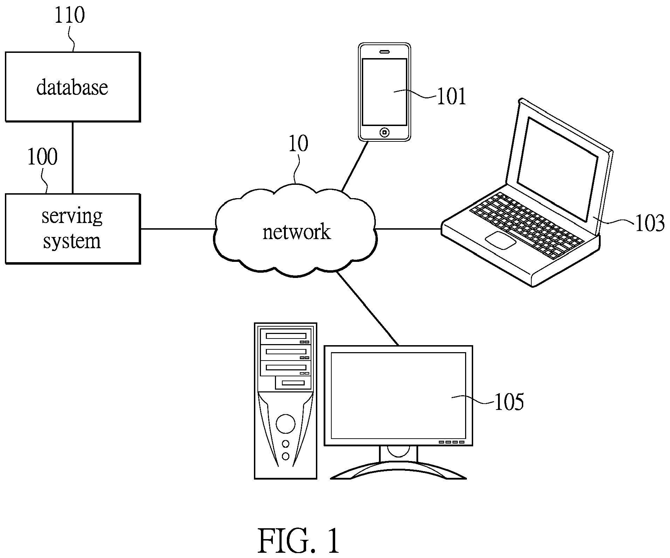

The disclosure is related to a method for providing a location-based personalized content and a system thereof. Reference is made to Fig. 1, which is a schematic diagram depicting a system framework of the system according to one embodiment of the disclosure. The system provides a serving system 100 that includes a database 110. The database 110 records basic data of multiple users and the data collected through a specific software program. The serving system 100 provides a corresponding software program installed in the user devices, e.g., a first user device 101, a second user device 103, and a third user device 105 shown in the diagram. The serving system 100 communicates with the user devices via the software program so as to collect data from the first user device 101, the second user device 103, and the third user device 105. After obtaining the user's permission, the serving system can collect the user's activity data over a network through the software program. The activity data includes activities on various social media, search records, followed contents, browsed contents, and time itineraries of various activities.

By a machine-learning algorithm, data features can be learned from the collected data, especially the features based on the geographic location, so as to generate a user preference that indicates the user's personalized interests. When obtaining the data that is generated as the user browses a specific geographic range, the location-based and personalized contents that match the user preference can be provided.

In an aspect of the disclosure, the serving system 100 receives the media content, i.e., the video, the audio, the picture, or the text, that is uploaded by a software program executed in the first user device 101, the second user device 103, or the third user device 105. The media content can be reported or produced by a user that is location-based. Therefore, the data uploaded to the serving system 100 may carry geographic information that allows the serving system 100 to establish the location-based content forming the data available to be queried in the database 110.

In one embodiment of the disclosure, the serving system 100 provides the specific software program or uses a web browser as a browser program for the user device to display the location-based personalized contents. The browser program forms a graphical user interface that uses an electronic map as a background. The user device may be an electronic device including a touch display that allows the user to drag and drop the electronic map by his/her hand gesture. While dragging and dropping the electronic map, the browser program may determine that a geographic range has been selected by the user, and a signal with respect to the geographic range is generated and transmitted to the serving system 100. The signal may carry the user identification data. The serving system 100 then queries the database according to the user identification data and the geographic range so as to obtain one or more location-based personalized contents within the geographic range. In the meantime, one or more links with respect to the one or more location-based personalized contents are also provided. The link displayed on the electronic map is such as a hyperlink in the form of a URL (uniform resource locator) or a database index, and can be appeared as a user image representing the user who provides the content.

In one further embodiment of the disclosure, the browser program executed in the user device initiates a user interface provided for the user to browse the media content. The user interface can be a web browser. The link with respect to the location-based personalized content can be a text, a symbol, or an icon marked on specific positions on the browser program.

Before providing the location-based personalized content to the user, the serving system may firstly establish a preference for each of the users and the user preference is specifically based on geographic location. When the system analyzes the geographic information correlating to the user preference, the location-based user preference with respect to each of the users can be obtained. The location-based user preference allows the system to provide each of the users to obtain the location-based and personalized content when the user browses a specific geographic range.

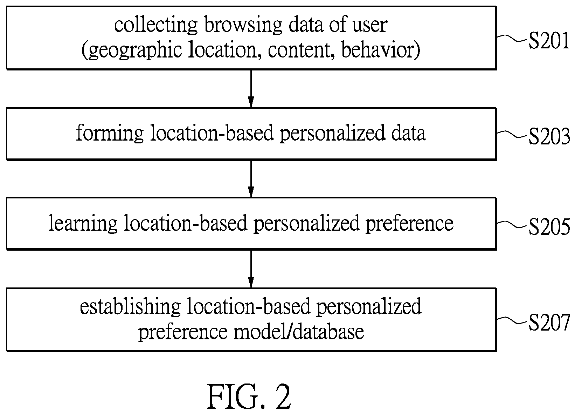

Reference is made to Fig. 2, which shows a flow chart describing a process for forming the user preference in the method for providing location-based personalized content according to one embodiment of the disclosure.

According to one of the embodiments, such as in step S201, the serving system gathers the user's browsing data through a browser program executed in the end user computer device. The features of the data are correlated to the content based on the geographic location. In an exemplary example, the user manipulates a mobile device that executes the browser program. When the user arrives at a location, the user reports or produces a video, an audio, a picture, or a text within the geographic range by a program, e.g., the browser program. The video, the audio, the picture, or the text is uploaded to the serving system. The content uploaded to the serving system includes metadata that at least records the geographic information and user identification data relating to the content. It should be noted that the serving system can obtain the user identification data when the user logs on the system. In step S203, the serving system analyzes the uploaded content for forming the location-based personalized data that is configured to be stored in the database.

In addition to establishing the database with the location-based contents by the serving system, the serving system collects the activity data of the users over the network through software programs executed in the computer devices. In step S205, the serving system can rely on the geographic information of the various activity data to establish the location-based personalized data of the users. A machine-learning algorithm can be incorporated to learn the data features from the geographic data and weights with respect to the data features. In step S207, a location-based personalized preference model that is used to define each user preference is formed for each of the users. The data of features may also be combined to constitute the location-based user preference. The serving system can accordingly rely on the user preference to provide one or more location-based personalized contents. It should be noted that the data features learned through the machine-learning algorithm can be assigned with different weights according to their levels of relevance. The feature with higher relevance can be assigned with a higher weight, and the feature with lower relevance can be assigned with a lower weight. Therefore, the user preference can be accurately described.

In one embodiment of the disclosure, the activity data collected by the serving system from the end user computer devices includes the activities on various social media, the search records, the followed contents, and the browsed contents, and the time itineraries of the activities. For example, browsing records collected by the serving system can be cookies, copies, and history records kept in a web browser. The activities on the social media are such as acts of check-ins, search records, likes, shares, follows, and replies. The information relating to the activities may include records of geographic locations. The records may cover the data of the related geographies and the location-based media contents. Further, when determining a level of the user preference, the serving system considers the time spent, the period of time, the frequency and length of time spent by the user browsing the content, and if the user shares the content to other users, and whether or not the content is produced by the user. The serving system relies on these data to establish the location-based personalized preference model and the database. The serving system can therefore perform a sorting of preference while providing the location-based personalized content to the user.

According to one of the embodiments, the serving system provides the contents to be browsed on an electronic map through the browser program executed in the end user computer device when the user browses the content on the electronic map. Each of the contents links to a specific geographic location. While browsing the contents, the serving system simultaneously gathers browsing records such as videos, audios, pictures, and/or texts from the user. The records include the user identification data, a geographic location or a geographic range (latitude and longitude), browsing contents, and the activities (such as likes, bookmarks, shares, etc.). The records may also include tags and times assigned to the contents. The records are available to be references learned by a learning algorithm for the user preference to be constituted.

In one further embodiment of the disclosure, the browser program provided by the serving system acts as a user interface provided for the user to browse the contents. The browser program can be a web browser provided for the user to browse various contents. The browsed content, including browsing record of the user, may be marked with the geographic information for the learning algorithm to learn a location-based preference of the user.

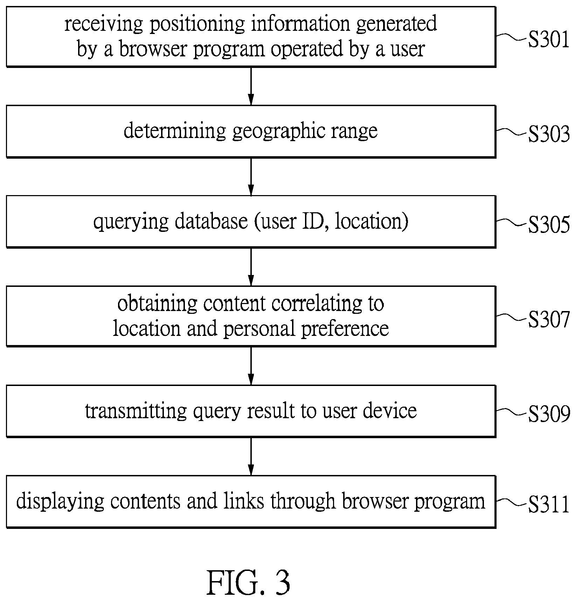

When completing the analysis of the user preference and establishing the location-based personalized preference model and the database, the serving system accordingly provides the location-based personalized contents. Fig. 3 shows a flow chart describing the method for providing location-based personalized content according to one embodiment of the disclosure.

In the beginning, the user manipulates the browser program to browse the contents displayed on a graphical user interface that is based on an electronic map, or browse the contents containing geographic information displayed on a user interface that is not based on an electronic map. The graphical user interface includes links that link to videos, audios, pictures, and/or texts. The links can be shown as pictures representing the user that allow the user to click on. The contents linked to the links are the aforementioned location-based personalized contents. In particular, the browser program may generate location information according to the geographic location browsed. For example, the browser program that may be based on an electronic map displays a map of a geographic range according to a geographic location. The location information sent to the serving system may represent a longitude and latitude of a central location of the geographic range (step S301).

In the serving system, the geographic range is determined according to the geographic location received from the end user computer device (step S303). According to one of the embodiments, when the user manipulates the browser program to a specific geographic location, the browser program transmits the geographic location or a related range to the serving system. The serving system can accordingly provide the location-based personalized contents to the user. In another embodiment, the browser program can be a video or text browser. The content to be browsed through the browser program still includes the information for the serving system to determine the geographic location. For example, the metadata of the content records the geographic information. Similarly, the serving system retrieves the location information of the contents from the browser program and accordingly provides the location-based personalized contents. In one further embodiment, the computer device manipulated by the user can be a mobile device and the browser program executed in the mobile device can retrieve the location information from the signals generated by a sensor (a GPS sensor) or a wireless network module of the mobile device. The location information generated by the aforementioned schemes, after being sent to the serving system, allows the serving system to provide the location-based personalized contents according to the location of the mobile device.

Under a circumstance of application, a software program executed in a user's computer device allows the user's computer device to link to the serving system, and the serving system receives the user identification data through the browser program while the user signs into the system. The serving system can also obtain a browsing range of the user device so as to determine a geographic range. The serving system can provide the location-based personalized content based on this geographic range since the user preference may be changed with respect to changes in the size of the geographic range. Further, the quantity of contents provided to the user may also be considered due to restrictions such as limitations (a screen size and resolution, etc.) of the display.

Next, according to the data received from the user device, the serving system queries the database according to the geographic range and/or the user identification data (step S305). It should be noted that the database records the videos, audios, pictures, and/or texts that are uploaded by users who use their devices to report or produce the location-based contents. In the serving system, correlations among the contents, the related geographic locations, and the user identification data are established. By querying the database, the location-based personalized preference model that is obtained by learning the user preference can be applied to the data received from the user device so as to obtain the location-based personalized contents from the database (step S307). The location-based personalized contents are the data recorded in the database of the serving system, and a query result based on the geographic range and the user preference are in form of links thereto is transmitted to the user device (step S309). The browser program executed in the end user computer device, i.e., the user device, can accordingly mark the links and the contents (step S311). In an aspect of the disclosure, the location-based personalized contents may include a location-based and personalized advertisement provided by the serving system. In the meantime, if one location correlates to multiple location-based personalized contents that match the conditions, i.e., the same geographic range and/or user preference, in one embodiment of the disclosure, the multiple links with respect to the contents can be sorted by the user preference learned by the serving system and displayed on the electronic map. In one further embodiment, the links with respect to the location-based personalized contents sorted by the user preference learned by the serving system can be displayed on a video or a text browser in a list or in a specific way. The links displayed on the list can be represented as texts, symbols, or icons marked on a user interface. The links can also be sorted by geographic addresses. The location-based personalized contents can be updated when the user modifies the browsed content and the geographic information generated.

According to one embodiment of the disclosure, when the user uses the browser program to browse a specific geographic location, the serving system not only gathers the user's browsing records, but also continuously analyzes and learns from new browsing records. In other words, the serving system continuously collects the user's browsing records so as to learn and update the location-based personalized preference model specified to the user. The serving system can therefore provide the location-based personalized content that meets the user preference more accurately. The contents can be various video/audio contents and/or commercial information, e.g., advertisements. That is, the method allows the system to provide the contents according to the location-based user preference since the personalized user preference may be different at different locations.

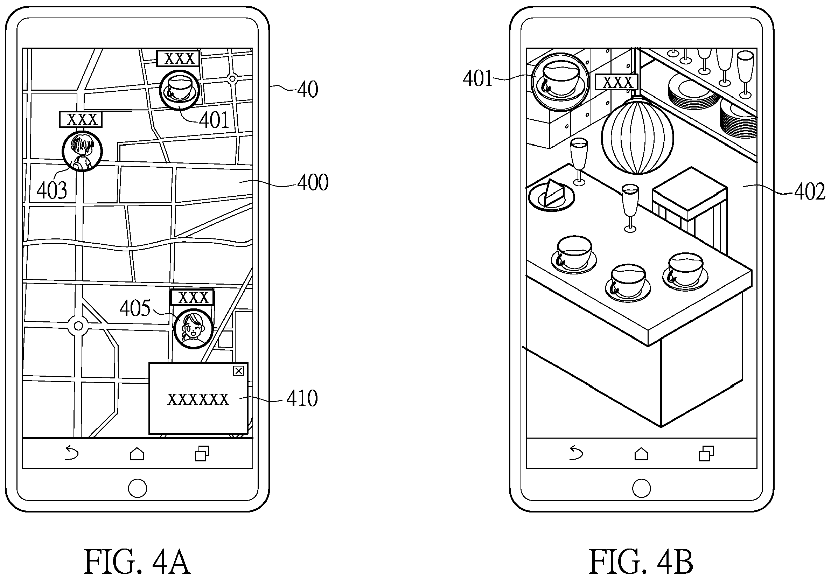

Fig. 4A is a schematic diagram depicting an end user browser program in one embodiment of the disclosure. An exemplary example of the browser program 40, e.g., an application, shown in the diagram is operated in a mobile device. An electronic map 400 is displayed on the browser program 40. Several location-based personalized content-linked icons 401, 403, and 405 are provided by the serving system through any of the above embodiments of the method. The user can click on any of the content-linked icons 401, 403, and 405 to view the contents. When the user uses the electronic map 400 to view contents by a hand gesture, e.g., a sliding gesture, the geographic range is changed according to a corresponding location. According to the method described in Fig. 3, the serving system can update the contents based on a new geographic range.

Furthermore, in one embodiment of the disclosure, when the user browses a specific geographic range, the location-based personalized contents transmitted by the serving system to the user device may have one or more location-based personalized advertisements 410. The advertisements 410 can be shown on a specific position of the electronic map 400 or marked at a specific geographic location. The location-based personalized commercial content is based on the present geographic range browsed by the user and may be interesting to the user.

In Fig. 4B, a media content 402 is displayed on the screen of the user device when the user clicks on the content-linked icon 401. The media content 402 is the location-based personalized content that matches both the geographic range and the user preference.

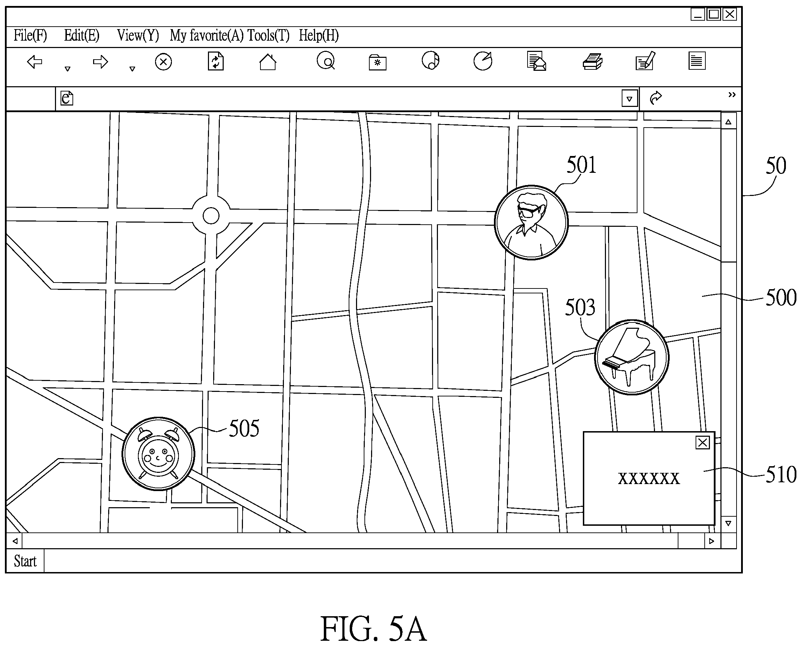

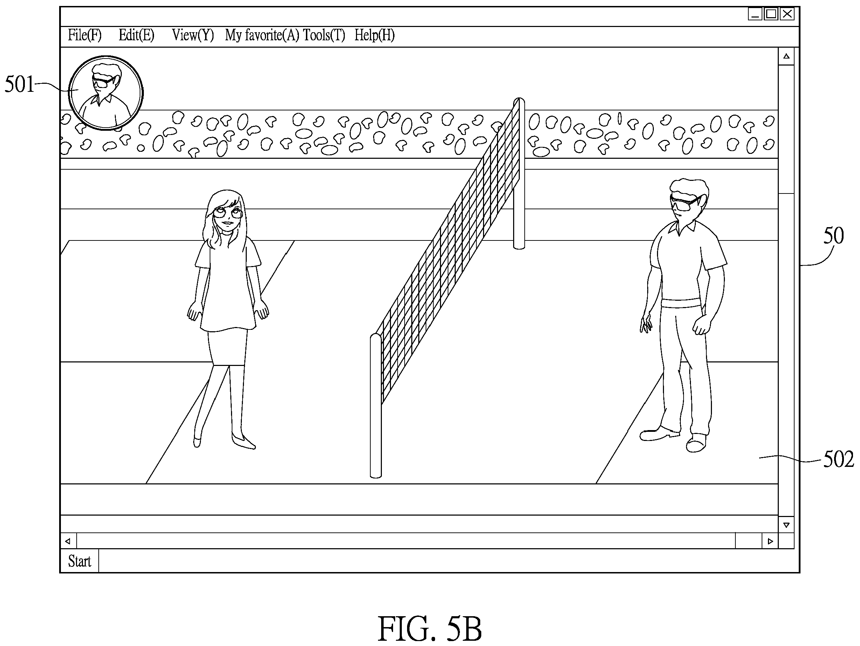

Fig. 5A is a schematic diagram depicting a web browser acting as the browser program in one embodiment of the disclosure. The browser program 50 implements a graphical user interface by an electronic map 500. Several content-linked icons 501, 503, and 505 that link to the corresponding location-based personalized contents matching both the browsed geographic range and the user preference are shown. Fig. 5B then displays a media content 502 after the user clicks the content-linked icon 501. It should be noted that both screens of Fig. 5A and Fig. 5B can include a location-based personalized advertisement 510.

In an exemplary example, network data searched through the web browser shown in Fig. 5A and Fig. 5B is not the content being browsed using an electronic map. Nevertheless, the serving system can still obtain location data of the location of the browsed content. Further, the location data can be generated by the end user computer device. For example, the location of the computer device can be determined according to the signals generated by a GPS sensor or from a wireless local area network.

It should be noted that the location-based personalized advertisement 510 is a commercial content that is also one of the location-based personalized contents viewed by the user at a specific geographic location. The location-based personalized advertisement 510 is also the content learned by the serving system. As discussed above, different users at different locations may view different advertisements, and the user may view different advertisements at different locations.

In conclusion, according to the above embodiments of the method and system for providing location-based personalized content, the serving system in the system analyzes features of users from the browsing records generated at different locations by means of software. A machine learning algorithm can be incorporated to obtain the personalized features of the user by generalizing the analyzed data. After analysis, the preference of each of the users can be determined, especially the preferences relating to geographic ranges. A personalized database is established based on the attributes, frequencies, viewing times, and likes of media contents that the user views at different geographic ranges. The personalized database also includes levels of preferences of the user at different geographic locations. Tags assigned to the contents can be referred to so as to determine the user preference. Thus, when the user uses a browser program to browse the different geographic locations, the serving system can provide or recommend the contents that match the location-based user preference. The subsequent activities performed by the user when the user receives the contents provided by the serving system become the data available for the serving system to analyze and update the database.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A method for providing a location-based personalized content, operated in a serving system (100), comprising:
receiving location data and user identification data generated by a browser program (40) executed in a computer device;
determining a geographic range according to the location data;
querying a database (110) based on the geographic range and the user identification data so as to obtain one or more of the location-based personalized contents that match a user preference within the geographic range; and
transmitting one or more links with respect to the one or more location-based personalized content based on the geographic range and the user preference to the computer device, and each of the links are marked by the browser program (40).

2. The method according to claim 1, wherein the user preference is established by steps of:
the serving system (100) collecting activity data in a network from the user through a software program executed in the computer device;
generating the user's location-based personalized data based on the geographic information in the activity data; and
obtaining data features and weights thereof by learning the location-based personalized data so as to generate a location-based personalized preference model used to describe the user preference for obtaining one or more the location-based personalized content based on the user preference from the database (110).

3. The method according to claim 1, wherein, when determining the geographic range based on the location data, the geographic range is determined according to a browsing range shown on the browser program (40) of the computer device, and the browser program (40) is a video or text browser and the link with respect to each of the location-based personalized contents is marked as a text, a symbol, or an icon in a list on the browser program (40).

4. The method according to claim 1, wherein the browser program (40) forms a graphical user interface that uses an electronic map (400) as a background and the links of the location-based personalized contents are user images displayed on the electronic map (400); when one location correlates to multiple of the location-based personalized contents that match the user preference, the links displayed on the electronic map (400) are sorted according to the user preference.

5. The method according to claim 4, wherein the user preference is created by steps of:
the serving system (100) collecting activity data in a network from the user through a software program executed in the computer device;
forming a location-based personalized data with respect to the user according to a geographic information in the activity data; and
obtaining data features and weights thereof by learning the location-based personalized data so as to generate a location-based personalized preference model used to describe the user preference for obtaining one or more the location-based personalized content based on the user preference from the database (110).

6. The method according to claim 1, wherein the location-based personalized content transmitted from the serving system (100) to the computer device is one or more of a location-based personalized advertisement (410).

7. The method according to claim 1, wherein one or more of the location-based personalized content obtained by querying the database (110) is a video, an audio, a picture or a text that is reported or created within the geographic range, and contents in the database (110) include the location-based video, the audio, the picture, or the text produced by the users and uploaded from the computer devices, and in the serving system (100), correlations among the contents, the geographic locations and user identification data are established.

8. The method according to any of claims 1 to 7, wherein the user preference is created by steps of:
the serving system (100) collecting activity data in a network from the user through a software program executed in the computer device, wherein the activity data of the user over the network collected by the serving system (100) includes user activities on various social media, search records, followed contents, browsed contents, and time information thereof;
forming a location-based personalized data with respect to the user according to a geographic information in the activity data; and
obtaining data features and weights thereof by learning the location-based personalized data so as to generate a location-based personalized preference model used to describe the user preference for obtaining one or more the location-based personalized content based on the user preference from the database (110).

9. A system for providing a location-based personalized content, comprising:
a browser program (40) executed in a computer device; and
a serving system (100), formed by one or more servers, having a database (110) that records location-based videos, audios, pictures or texts produced and uploaded by the computer devices used by multiple users, wherein in the serving system (100), correlations among the contents, geographic location, and user identification data are established;
wherein the serving system (100) operates a method for providing the location-based personalized content comprising:
receiving location data generated by the browser program (40) and user identification data;
determining a geographic range based on the location data;
querying the database (110) according to the geographic range and the user identification data, and obtaining one or more the location-based personalized contents that match a user preference within the geographic range; and
transmitting one or more links with respect to each of the location-based personalized contents based on the geographic range and the user preference to the computer device, and the one or more the links are marked on the browser program (40).

10. The system according to claim 9, wherein the serving system collects activity data in a network from the user through a software program executed in the computer device, forms a location-based personalized data with respect to the user according to a geographic information in the activity data, and obtains data features and weights thereof by learning the location-based personalized data so as to generate a location-based personalized preference model used to describe the user preference for obtaining one or more the location-based personalized content based on the user preference from the database.

11. The system according to claim 9, wherein the browser program (40) forms a graphical user interface that uses an electronic map (400) as a background and the links of each the location-based personalized contents are user images displayed on the electronic map (400).

12. The system according to claim 9, wherein the browser program is a video or text browser and the link with respect to each of the location-based personalized contents is marked as a text, a symbol, or an icon in a list on the browser program; one or more of the location-based personalized content obtained by querying the database is a video, an audio, a picture, or a text that is reported or created within the geographic range.

13. The system according to claim 9, wherein the location-based personalized content transmitted from the serving system to the computer device is one or more of a location-based personalized advertisement.

14. The system according to claim 9, wherein the serving system (100) collects activity data in a network from the user through a software program executed in the computer device, forms a location-based personalized data with respect to the user according to a geographic information in the activity data, and obtains data features and weights thereof by learning the location-based personalized data so as to generate a location-based personalized preference model used to describe the user preference for obtaining one or more of the location-based personalized content based on the user preference from the database (110).

15. The system according to claim 14, wherein the activity data of the user over the network collected by the serving system (100) includes user activities on various social media, search records, followed contents, browsed contents, and time information thereof.
